# FASCICULE DE BREVET EUROPEEN

(11) **EP 0 586 492 B1**
(45) Date de publication et mention de la délivrance du brevet: **03.01.1996**
(21) Numéro de dépôt: 92911478.3
(22) Date de dépôt: 26.05.1992
(51) Int. Cl.: G06K 7/10, G06K 7/08

(54) **SYSTEME D'IDENTIFICATION AUTOMATIQUE D'OBJETS OU D'INDIVIDUS PAR INTERROGATION A DISTANCE**
Selbstätiges Erskenungssystem von Gegenständen oder Personen mit Fernabfragevorrichtung
SYSTEM FOR AUTOMATIC IDENTIFICATION OF OBJECTS OR INDIVIDUALS BY REMOTE INTERROGATION

(30) Priorité: 28.05.1991 FR 9106399
(43) Date de publication de la demande: 16.03.1994
(73) Titulaire: COMMISSARIAT A L'ENERGIE ATOMIQUE, F-75015 Paris (FR)
(72) Inventeur: JEUCH, Pierre, F-38180 Seyssins (FR); LE ROY, Alain, F-38240 Meylan (FR)
(74) Mandataire: Dubois-Chabert, Guy
(86) Numéro de dépôt international: FR9200469
(87) Numéro de publication internationale: WO9222040

(56) Documents cités:
- EP-A- 0 161 779
- EP-A- 0 285 419
- GB-A- 2 116 808
- JP-A-59 057 348

## Description

La présente invention a pour objet un système d'identification automatique d'objets ou d'individus par interrogation à distance. Elle trouve de nombreuses applications notamment dans le domaine de la reconnaissance d'individus porteurs de badges ou dans le domaine de la comptabilisation et/ou du contrôle de marchandises entreposées ou mises en vente dans des magasins.

Dans les systèmes d'identification automatique connus, il est possible de reconnaître un objet ou un individu porteurs respectivement d'une étiquette ou d'un badge muni d'un circuit code et passant sous ou à proximité d'un portique. Ce portique émet alors des impulsions RF (radiofréquence) vers l'étiquette, ou le badge. Ces impulsions sont utilisées pour alimenter l'étiquette et interroger le code qui y est stocké. Le code de l'étiquette ou du badge porté par l'objet ou l'individu est ainsi reconnu.

Un tel dispositif a été décrit dans la publication n° EP-O 241 148.

De tels systèmes présentent notamment L'inconvénient de ne pouvoir interroger qu'un seul objet ou individu à la fois.

Un autre système d'identification automatique de personnes porteuses d'un badge ou de marchandises porteuses d'étiquettes, à partir d'un poste E/R interrogateur, est connu. Ce système est décrit dans Le document EP-A-O 161 779 déposé par SENELCO LIMITED le 3 avril 1985. Dans un tel système, chacun de ces badges ou étiquettes comporte un circuit E/R répondeur. Le poste E/R interrogateur envoie un signal d'interrogation à l'ensemble des circuits E/R répondeurs qui envoient des signaux de réponse comportant chacun un premier signal d'identification codé, enregistré dans ledit circuit. Lorsque le poste E/R interrogateur reçoit simultanément plusieurs signaux de réponse, il retransmet ces signaux de réponse aux circuits E/R répondeurs ; ceux-ci vérifient alors si le signal de réponse reçu correspond à son propre signal d'identification codé. Lorsqu'il y a correspondance de ces deux signaux, le circuit E/R répondeur concerné s'inhibe ; dans le cas contraire, il continue la transmission. Le procédé de transmission consiste ensuite en ce que le poste E/R interrogateur envoie un second signal d'identification codé que chaque circuit E/R répondeur va comparer à son premier signal d'identification codé. Le circuit E/R répondeur qui établit la correspondance entre ce premier et ce second signaux est choisi pour recevoir les prochaines instructions.

Un autre système d'authentification de personnes ou d'objets porteurs d'un poste E/R répondeur est décrit dans la demande de brevet EP-A-O 285 419. Ce système comporte une unité d'interrogation apte à émettre et recevoir,respectivement, des signaux d'interrogation et des signaux de réponse, ces signaux de réponse étant émis par des postes E/R répondeurs. Chacun de ces postes répondeurs contient un code d'identité comprenant une pluralité de champs d'informations. L'unité d'interrogation envoie un signal d'interrogation pour interroger simultanément les champs d'informations de tous les postes répondeurs. Les postes répondeurs dont le champ interrogé contient l'information recherchée, renvoient une série de signaux de réponse à l'unité d'interrogation qui est apte à déterminer, à partir des signaux reçus, les codes d'identité des postes répondeurs ayant répondu.

De tels systèmes ne permettent pas de reconnaître de façon quasi-simultanée une pluralité d'objets, ou d'individus, par détermination successive de chaque bit constituant le code contenu dans l'étiquette, ou le badge, desdits objets, ou individus et de ce fait ne permettent pas de traiter un grand nombre d'objets.

La présente invention a justement pour objectif de permettre la détection et la reconnaissance quasi-simultanée de tous les objets, ou individus, d'un ensemble en les interrogeant simultanément et de permettre ainsi de traiter un grand nombre d'objets.

L'invention consiste en l'émission de signaux RF par un portique. Ces signaux RF sont des questions auxquelles les étiquettes répondent par un signal d'acquiescement ou par l'absence de signal, permettant ainsi au portique de déterminer les éléments de codes contenus dans cet ensemble d'objets. Lorsqu'un code a été retrouvé, l'étiquette contenant ce code s'inhibe afin de permettre la détection des autres codes.

Durant toute la description, on utilisera indifféremment, d'une part, les termes d'étiquette, de badge ou de moyens E/R (émetteurs/récepteurs) répondeurs, et, d'autre part, les termes de portique ou de moyens E/R (émetteurs/récepteurs) interrogateurs.

De plus, durant cette description, on comprendra par "inhiber", le passage dans un mode silencieux ou non actif, c'est-à-dire où l'objet ne réagit plus.

L'invention a pour objet, de façon plus précise, un système d'identification automatique d'objets ou d'individus par interrogation à distance comprenant des moyens émetteurs/récepteurs (E/R) interrogateurs aptes à émettre en continu un signal radio fréquence et des moyens E/R répondeurs associés à chacun des objets ou individus, lesdits moyens E/R répondeurs comportant :
- un circuit de réception et d'émission apte à recevoir des informations codées provenant des moyens E/R interrogateurs, apte à émettre une réponse et comprenant au moins une antenne d'émission/réception ;
- un dispositif d'alimentation des moyens répondeurs ;
- des moyens de mémorisation dans lesquels est stocké un code numérisé lié à chaque objet ou individu ; et
- un circuit de contrôle et de séquencement apte à gérer tous les signaux nécessaires pour répondre aux signaux envoyés par les moyens E/R interrogateurs ; lesdits moyens E/R interrogateurs comportant :
- un dispositif d'émission de signaux radiofréquence qui comprend un dispositif de réception de signaux radiofréquence provenant des moyens E/R répondeurs et un modulateur générant des formes d'onde différentes ;
- des moyens de traitement aptes à gérer les tâches nécessaires à la recherche des codes numérisés envoyés par les moyens E/R répondeurs ; et
- une mémoire apte à mémoriser lesdits codes numérisés reçus ;
- l'ensemble des signaux échangés entre les moyens E/R interrogateurs et les moyens E/R répondeurs pour déterminer les codes des objets ou des individus formant une séquence de recherche de code ; caractérisé en ce que la séquence de recherche de code consiste en une séquence de signaux d'interrogation qui changent en fonction des réponses reçues des moyens E/R répondeurs, et en ce que les moyens E/R répondeurs comportent en outre :
- des moyens d'inhibition connectés audit circuit de contrôle et de séquencement et aptes à répondre aux moyens E/R interrogateurs par une inhibition momentanée ou définitive des moyens E/R répondeurs, ces moyens d'inhibition comportant au moins deux bascules, la première bascule étant une bascule d'inhibition momentanée qui est apte à assurer l'inhibition momentanée des moyens E/R répondeurs durant la séquence de recherche en cours lorsque les moyens E/R répondeurs concernés constatent que les signaux d'interrogation reçus en cours de recherche ne correspondent pas au code mémorisé dans ses moyens de mémorisation, les moyens E/R répondeurs restant non-inhibés à la fin de la séquence de recherche présentant un code numérisé dans leurs moyens de mémorisation correspondant aux signaux d'interrogation reçus ; et la seconde bascule étant une bascule d'inhibition définitive qui assure l'inhibition des moyens E/R répondeurs restant non-inhibés à la fin de la séquence de recherche lorsque le code numérisé recherché a été correctement reçu et mémorisé par les moyens E/R interrogateurs.

Ces inhibitions restent actives tant que les moyens E/R répondeurs sont alimentés. Après interruption de l'alimentation, les moyens E/R répondeurs sont de nouveau aptes à répondre à une nouvelle séquence d'interrogations.

Avantageusement, le code numérisé comporte un code d'identification du type d'objet ou de personne, éventuellement un sous-code aléatoire assurant l'identification unitaire de l'objet ou de la personne considéré, et éventuellement un code de contrôle pour vérifier la bonne intégrité des informations transmises.

Ces codes ne sont pas nécessairement à la suite les uns des autres ; ils peuvent être imbriqués les uns dans les autres, en particulier pour le code de contrôle, afin de vérifier la validité des informations transmises au fur et à mesure de i'interrogation.

Selon une caractéristique préférée de l'invention, les moyens de mémorisation des moyens E/R répondeurs comprennent une mémoire de code et un compteur d'adresse apte à pointer tour à tour sur chacun des éléments constituant le code numérisé stocké dans la mémoire, ce compteur étant connecté au circuit de contrôle et de séquencement par une connexion "horloge" de commande d'avance du compteur, et une connexion "RAZ" de remise à zéro pour pointer sur le premier élément du code numérisé.

D'après une caractéristique préférée de l'invention, le modulateur des moyens E/R interrogateurs génère au moins deux formes d'onde associées ensemble pour former au moins quatre types d'informations codées.

De plus, le dispositif d'alimentation comprend un circuit de récupération d'énergie en provenance des moyens E/R interrogateurs.

De façon avantageuse, les moyens de traitement des moyens E/R interrogateurs assurant la gestion des tâches nécessaires à la recherche des codes numérisés permettent de procéder aux étapes suivantes :
a) envoi d'une information "début de séquence de recherche" correspondant à l'interrogation du premier élément de code numérisé ;
b) attente de la réponse fournie par les moyens E/R répondeurs ;
c) mémorisation, dans la mémoire des moyens E/R interrogateurs, d'un état logique correspondant à l'élément en cours de traitement du code numérisé et envoi d'une information de type correspondant àla réponse reçue afin d'interroger l'élément de code suivant ;
d) retour à l'étape b) jusqu'à la fin de la séquence de recherche lorsque le dernier élément de code est identifié ;
e) vérification de la validité du code numérisé reçu ;
f) mémorisation, dans ladite mémoire, du code numérisé reçu lorsque ledit code reçu est valide, et rejet dudit code numérisé dans le cas contraire avec envoi d'une information "début de séquence et code précédent erroné" et retour à l'étape b) ;
g) retour à l'étape a) lorsque le code reçu est valide afin d'interroger d'autres codes jusqu'à obtention d'un code nul.

Selon une autre caractéristique préférée de l'invention, le circuit de contrôle et de séquencement des moyens E/R répondeurs permet de procéder aux étapes suivantes :
a) réception de l'impulsion "début de séquence de recherche" envoyée par les moyens E/R interrogateurs ;
b) mise à zéro du compteur d'adresse des moyens de mémorisation des moyens E/R répondeurs ;
c) inhibition momentanée de moyens E/R répondeurs ou émission de fréquence jusqu'à réception de l'information codée suivante en provenance des moyens E/R interrogateurs, selon l'activité des moyens E/R répondeurs, de l'état logique de l'élément de code en cours de traitement et le type de la dernière information reçue, l'activité étant l'opposé de l'inhibition ;
d) incrémentation du compteur d'adresse des moyens de mémorisation de code, et contrôle de la valeur de cette adresse avec passage à l'étape g) lorsque ladite valeur correspond au dernier élément du code traité ;
e) réception de l'information envoyée par les moyens interrogateurs de type correspondant à la réponse émise par les moyens E/R répondeurs à l'étape c) ou réception d'une information début de séquence ;
f) inhibition momentanée des moyens E/R répondeurs jusqu'à réception d'une information "début de séquence de recherche" en provenance des moyens E/R interrogateurs au cas où l'information reçue en c) par les moyens E/R interrogateurs est différente de l'information stockée à l'adresse correspondante dans la mémoire des moyens E/R répondeurs ou, dans le cas contraire, retour à l'étape c) ;
g) inhibition définitive des moyens E/R répondeurs lorsque le dernier élément du code numérisé a été transmis correctement ou réactivation de ces moyens E/R répondeurs et retour à l'étape b) dans le cas contraire.
L'information début de séquence de l'étape e) peut être reçue par les moyens répondeurs à la suite d'un défaut de transmission.

Par ailleurs, le nombre d'éléments du code est N, ces éléments portant les adresses de O à N - 1.

Dans un mode de réalisation préféré, le code numérisé consiste en une suite de bits. En outre, les moyens E/R interrogateurs comportent au moins trois antennes d'émission reliées chacune en amont à un émetteur, ces antennes fonctionnant deux par deux, et au moins trois antennes de réception connectées chacune à un récepteur et à un démodulateur en aval desquels un organe de décision génère un signal de réception d'au moins une antenne.

Selon ce même dernier mode de réalisation, les moyens de traitement des moyens E/R interrogateurs assurant la gestion des tâches nécessaires à la recherche des codes numérisés permettent de procéder aux étapes supplémentaires suivantes :
- choix d'une configuration d'émission consistant à choisir les antennes d'émission à associer ensemble lors de la mise en fonctionnement du système d'identification ;
- changement de la configuration d'émission et reprise de la séquence de recherche lorsque le code numérisé n'a pas été transmis correctement ;
- mémorisation du code numérisé lorsque ledit code a été considéré erroné pour au moins trois configurations d'émission différentes ;
- mise en oeuvre successive de toutes les séquences de recherche liées aux configurations d'émission différentes pour vérifier la totale inhibition des moyens E/R répondeurs.

En permettant ainsi la détection quasi-simultanée d'un grand nombre d'objets, la présente invention permet donc un gain de temps considérable sur les dispositifs de l'art antérieur précédemment rappelés.

D'autres avantages et caractéristiques de l'invention ressortiront mieux dans la description qui va suivre donnée à titre illustratif mais non limitatif.

On prendra, à titre d'exemple et pour décrire l'invention, le cas de marchandises munies d'étiquettes et regroupées dans un caddie que le client passe sous un portique de détection ; dans cet exemple, le système objet de l'invention permet la détermination quasi-instantanée ainsi que la facturation de marchandises rassemblées en vrac dans le caddie. La description se réfère aux dessins annexés dans lesquels :
- la figure 1 représente schématiquement le circuit électronique du portique selon un mode de réalisation de l'invention ;
- la figure 2 représente ce même circuit selon un mode de réalisation préféré de l'invention ;
- la figure 3 représente schématiquement le circuit électronique d'une étiquette ;
- la figure 4 représente les étapes de la gestion des tâches nécessaires à la recherche des codes numérisés ;
- la figure 5 représente les étapes effectuées par le circuit de contrôle et de séquencement de l'étiquette ; et
- les figures 6A, 6B, 6C représentent, sous forme de tableaux, un exemple d'identification de trois étiquettes E1, E2, E3 ; les différentes étapes de cette identification sont représentées sur chacune des lignes de ces tableaux, les tableaux des figures 6B et 6C comportant les étapes successives, respectivement, à celles décrites dans les tableaux des figures 6A et 6B.

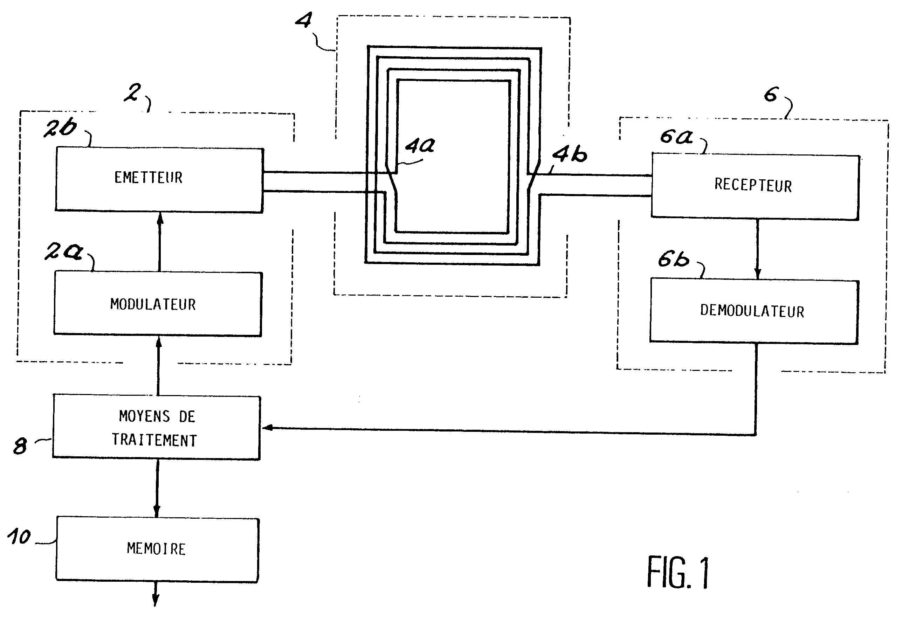

La figure 1 représente le circuit électronique du portique. Ledit portique est constitué notamment d'un système d'émission 2, d'une antenne 4 d'émission/réception et d'un système de réception 6. Des moyens de traitement tels qu'un circuit de séquencement 8 assure la gestion des signaux émis et des signaux reçus.

Dans le mode de réalisation représenté sur la figure 1, le portique comprend deux antennes, à savoir une antenne d'émission 4a et une antenne de réception 4b, étant bien entendu, que le portique peut comporter une ou plusieurs antennes pouvant assurer à la fois l'émission et la réception.

Lorsque le caddie arrive sous le portique, le circuit 8 de séquencement donne l'ordre de moduler, par le modulateur 2a, puis de transmettre, par l'émetteur 2b et l'antenne 4a, un signal d'interrogation vers les étiquettes. Ce signal d'interrogation est avantageusement constitué de deux bits émis successivement qui modulent en phase ou en fréquence le signal émis en continu par l'émetteur 2b via l'antenne 4a du portique. Ce signal peut donc prendre quatre états ayant les significations suivantes :
- début de séquence de recherche ;
- information de type "1" signifiant qu'au moins une étiquette encore active avait un bit de code à "1" à l'adresse recherchée lors de l'interrogation précédente ;
- information de type "0" signifiant qu'aucune étiquette encore active n'avait un bit de code à "1" à l'adresse recherchée lors de l'interrogation précédente ;
- début de séquence de recherche, le code reçu précédemment ne correspondant pas à un code valide.

Les étiquettes répondent en envoyant un signal de réponse qui est capté par l'antenne 4b et le récepteur 6a, puis démodulé par le démodulateur 6b afin d'être interprété par le circuit 8 de séquencement.

Ainsi le portique peut déterminer les valeurs des différents bits, ou éléments, des codes des objets du caddie. Lorsqu'un code complet a été retrouvé, l'étiquette correspondante s'inhibe et le circuit 8 de séquencement ordonne l'enregistrement du code retrouvé dans la mémoire 10. Cette mémoire est le lien entre le circuit électronique du portique et un système informatique, non représenté, permettant dans l'application choisie, de retrouver le libellé et le prix de chaque article par l'intermédiaire de son code numérisé, puis d'en faire la facture. Les moyens de traitement 8 et la mémoire 10 sont avantageusement réalisés par un microprocesseur.

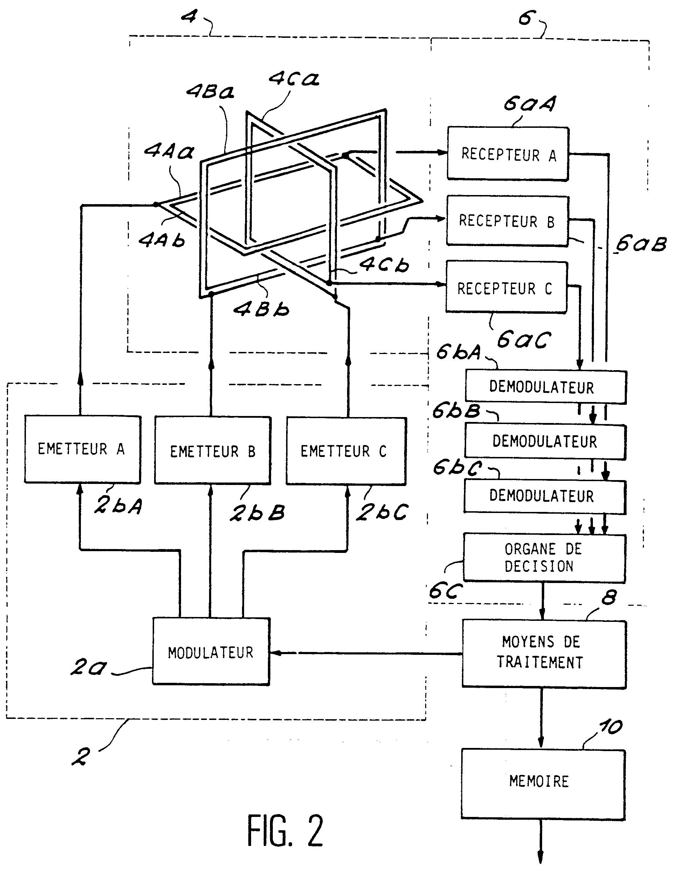

Sur la figure 2, on a représenté ce même circuit électronique selon un mode de réalisation différent. En effet, ce mode de réalisation à l'avantage, par rapport au mode de réalisation de la figure 1, de limiter les risques de mauvais couplage entre le portique et les étiquettes. Pour cela on utilise trois antennes d'émission 4Aa, 4Ba et 4Ca et trois antennes de réception 4Ab, 4Bb, et 4Cb orthogonales entre elles.

Les trois antennes de réception 4Ab, 4Bb et 4Cb sont connectées à trois récepteurs 6aA, 6aB et 6aC et trois démodulateurs 6bA, 6bB, 6bC, en aval desquels se trouve un organe de décision 6c générant le signal de détection de l'émission d'une ou de plusieurs antennes 4Ab, 4Bb, 4Cb.

L'organe de décision génère donc un signal de détection lorsqu'au moins un des trois démodulateurs a détecté un signal d'émission.

Les trois antennes d'émission 4Aa, 4Ba et 4Ca sont connectées à trois émetteurs 2bA, 2bB, 2bC et fonctionnent en configurations d'émission de deux antennes. Les deux antennes en fonctionnement sont alimentées par deux signaux en quadrature en provenance des émetteurs. Une configuration d'émission est choisie et conservée tant que les informations sont transmises correctement. Dès que le transfert s'effectue mal, une autre configuration d'émission est choisie. Les composants de la figure 2, identiques à leurs homologues de la figure 1, fonctionnent de la même manière et ne sont pas décrits à nouveau.

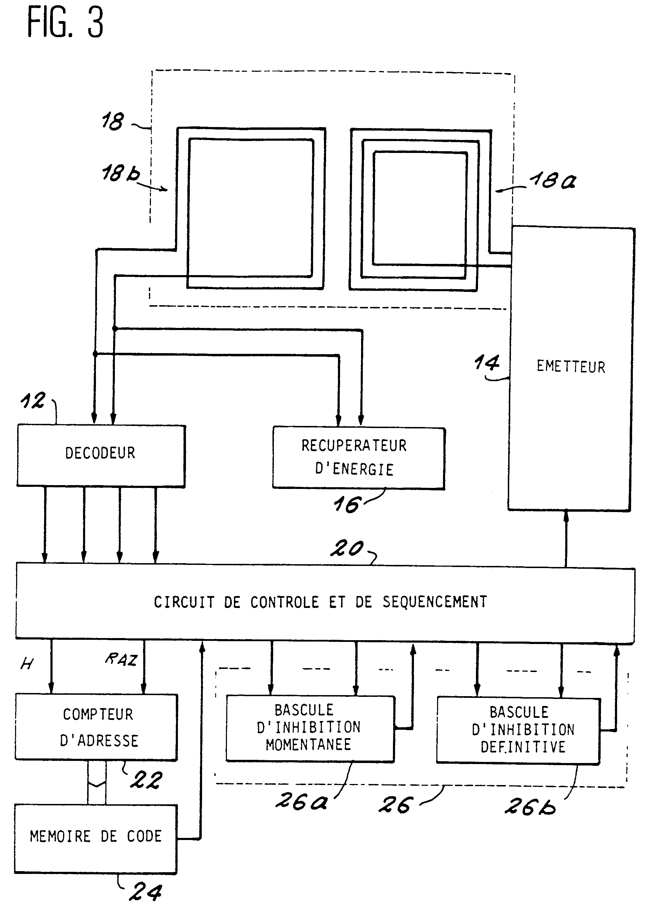

La figure 3 représente schématiquement le circuit électronique d'une étiquette. Il comprend notamment une antenne 18 de réception/émission et un microcircuit comportant un système 12 de réception de signaux en provenance du portique, un système 14 d'émission de signaux de réponse, un système 16 pour récupérer de l'énergie en provenance du portique, un circuit de contrôle et de séquencement 20, des moyens de mémorisation 22, 24 et des moyens d'inhibition 26. De façon avantageuse, le système 16 est un pont redresseur associé à une capacité de stockage. En outre, ce système 16 est relié aux différents éléments des moyens répondeurs. Les moyens de mémorisation comportent un compteur d'adresse 22 et une mémoire 24 et les moyens d'inhibition sont réalisés à l'aide de bascules 26a, 26b.

Dans le mode de réalisation représenté sur la figure 3, l'étiquette comprend deux antennes : une antenne d'émission 18a et une antenne de réception 18b. Ces antennes peuvent être soit directement réalisées sur le microcircuit, soit déposées sur le circuit imprimé sur lequel est rapporté le microcircuit.

Le circuit 20 de contrôle et de séquencement permet de gérer les informations reçues et les informations à envoyer. Ce circuit 20 assure également l'incrémentation du compteur d'adresse 22 et le fonctionnement des bascules d'inhibition 26.

La mémoire de code 24, contenant le code numérisé de l'étiquette, est reliée en entrée au compteur d'adresse 22 et en sortie au circuit 20 de contrôle et de séquencement.

Un signal d'interrogation envoyé par le portique est reçu par l'antenne de réception 18b, décodé par le décodeur 12 et les informations ainsi décodées sont envoyées vers le circuit 20 de contrôle et de séquencement. Ledit circuit 20 de contrôle et de séquencement gère et contrôle ces informations reçues : il décide de la réponse à envoyer, de l'incrémentation du compteur d'adresse 22 et du passage en mode inhibé de l'étiquette. La réponse à émettre est alors transmise à l'émetteur 14 qui envoi le signal de réponse au portique.

Parallèlement, le récupérateur d'énergie 16 transforme l'énergie reçue du portique en tension d'alimentation du circuit électronique de l'étiquette.

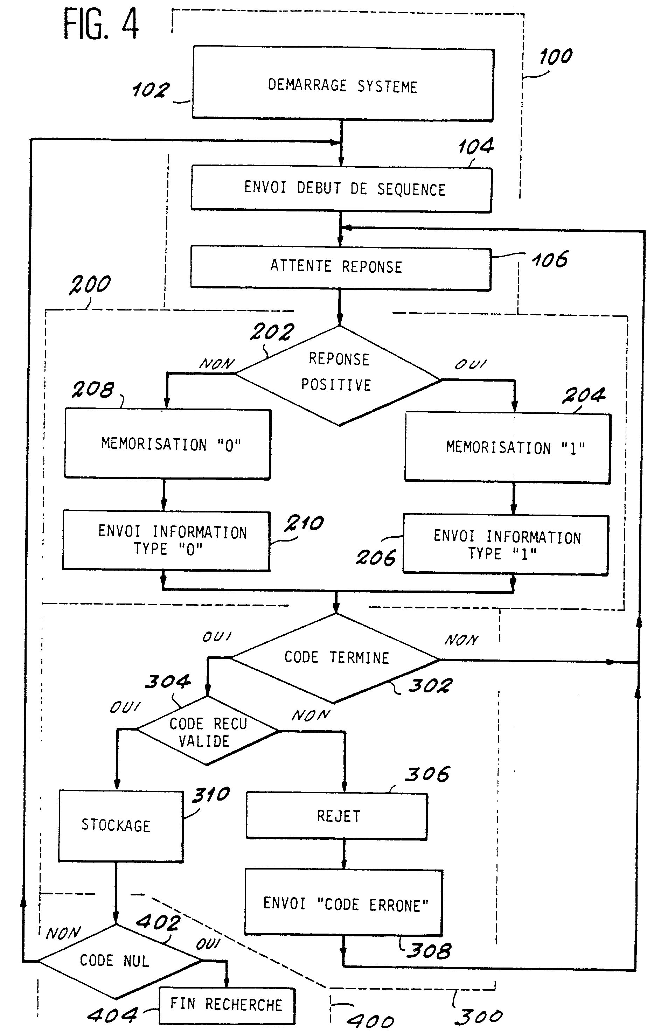

La figure 4 représente les étapes de la gestion des tâches nécessaires à la recherche des codes numérisés, telles qu'elles sont mises en oeuvre par le portique.

Une première étape 100 consiste à démarrer la séquence de recherche. Cette séquence de recherche d'un code débute en 102 lorsque la présence d'un caddie est détectée sous le portique. Cette séquence peut débuter automatiquement ou par actionnement mécanique. Un signal 104 de "début de séquence de recherche", correspondant à l'interrogation du premier élément de code, est alors envoyé vers les étiquettes. Le système attend en 106 la réponse desdites étiquettes.

Une seconde étape 200 de choix est alors amorcée selon la réponse reçue. Le choix en 202 s'effectue de la façon suivante : si la réponse reçue est positive, un "1" est mémorisé en 204 dans la mémoire' du portique, puis une information 206 de type "1" est envoyée vers les étiquettes ; si la réponse reçue est négative, un "0" est mémorisé en 208 et une information 210 de type "0" est envoyé.

Une troisième étape 300 consiste à vérifie en 302 si le code reçu est complet. Si le code est complet et valide en 304, ledit code est alors stock en 310 dans la mémoire du portique ; s'il est complet et erroné, ledit code est rejeté en 306 et un message 308 "début de séquence-code erroné" est envoyé comme réponse en 106. Lorsque le code reçu est incomplet, la séquence de recherche continue en 106.

Une quatrième étape 400 consiste en la réception du code, après stockage dudit code ; lorsque le code est nul, la séquence de recherche prend fin en 404 ; lorsqu'il n'est pas nul, la séquence de recherche se poursuit avec envoi d'un nouveau signal de "début de séquence de recherche" en 104.

Dans le cas du mode de réalisation selon la figure 2, quelques étapes supplémentaires sont nécessaires. Une configuration d'émission d'antennes est adoptée lors de l'étape 1 et conservée tant que le transfert des codes se fait correctement ; dès que ce transfert n'est plus correct, la configuration est modifiée. Cependant, si un même code erroné est transféré avec les trois configurations d'émission différentes, l'étiquette correspondante est supposée mal programmée et le code reçu est supposé valide. L'étiquette est alors inhibée.

Ce mode de réalisation de l'invention permet une vérification supplémentaire à la fin de la séquence de recherche, à savoir l'exécution de trois séquences de recherche complètes selon les trois configurations d'émission afin de vérifier si toutes les étiquettes ont bien été inhibées.

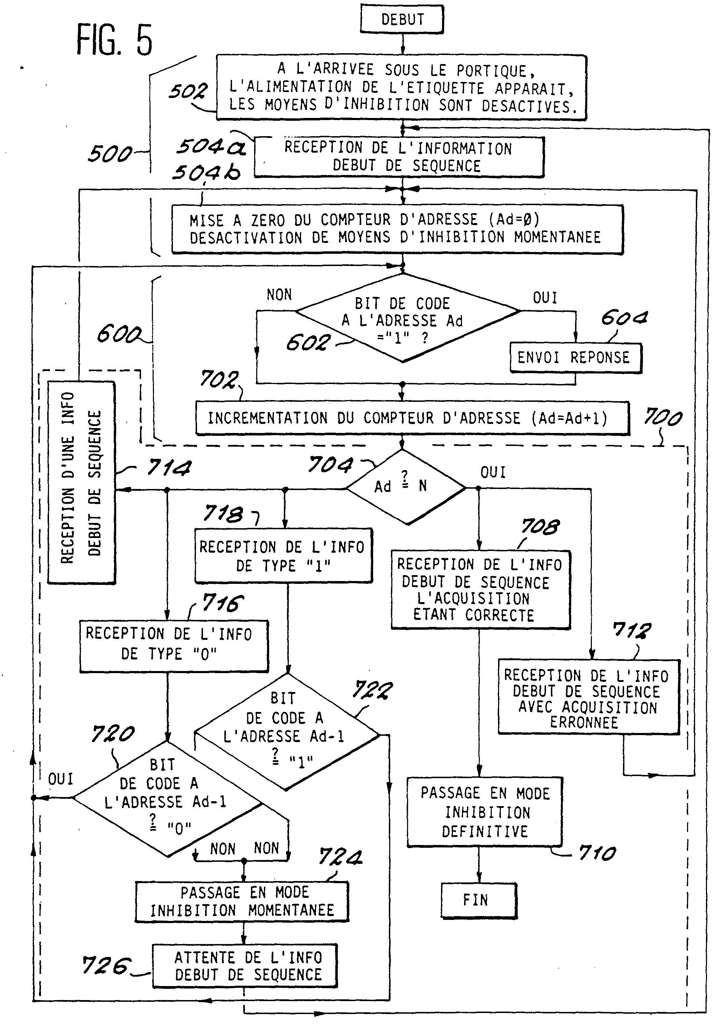

La figure 5 représente les étapes effectuées par le circuit 20 de contrôle et de séquencement situé sur chaque étiquette.

Une première étape 500 consiste à démarrer en 502 la séquence de recherche à la mise sous tension de l'étiquette et à réceptionner en 504a le signal de "début de séquence de recherche", et à mettre le compteur d'adresses à zéro en 504b.

Une seconde étape 600 consiste à choisir en 604 l'information à émettre en réponse à l'interrogation 602 en provenance du portique.

Une troisième étape 700 consiste à vérifier en 704 quel bit du code est en cours de traitement. Le compteur d'adresse Ad est incrémenté en 702, Ad = Ad + 1. A la fin du traitement en 704 du dernier bit du code, si le code traité a été validé par le portique, ce dernier envoie à l'étiquette en 708 une information début de séquence avec passage en 710 en mode inhibition définitive de l'étiquette traitée, pour permettre l'interrogation des autres étiquettes. Si le code traité n'est pas validé par le portique, ce dernier envoie à l'étiquette en 712 une information début de séquence avec acquisition erronée, ce qui provoque un retour à l'étape 504b.

Lorsque le bit traité n'est pas le dernier bit du code, l'étiquette reçoit une information de type "1" (718) émise par le portique si celui-ci a détecté une réponse (604) d'au moins une étiquette lors de l'interrogation de l'adresse (Ad - 1), ou une information de type "0" émise par le portique, si celui-ci n'a détecté aucune réponse lors de l'interrogation de l'adresse (Ad -1). Si l'information reçue à ce stade, n'est ni de type "1", ni de type "0", mais une information de début de séquence (714) àla suite d'un défaut de transmission, on retourne à l'étape 504b pour réinitialiser l'interrogation.

Si le bit de code à l'adresse (Ad - 1), précédemment traitée, ne contient pas l'information du type reçu (tests 720 - 722) l'étiquette s'inhibe momentanément en 724 jusqu'à la réception d'une information début de séquence 504a. Dans le cas contraire, on retourne à l'étape 600 où l'étiquette envoie une réponse sous forme d'un signal lorsque le bit de code à l'adresse Ad traitée contient un "1" ou d'une absence de signal dans le cas contraire.

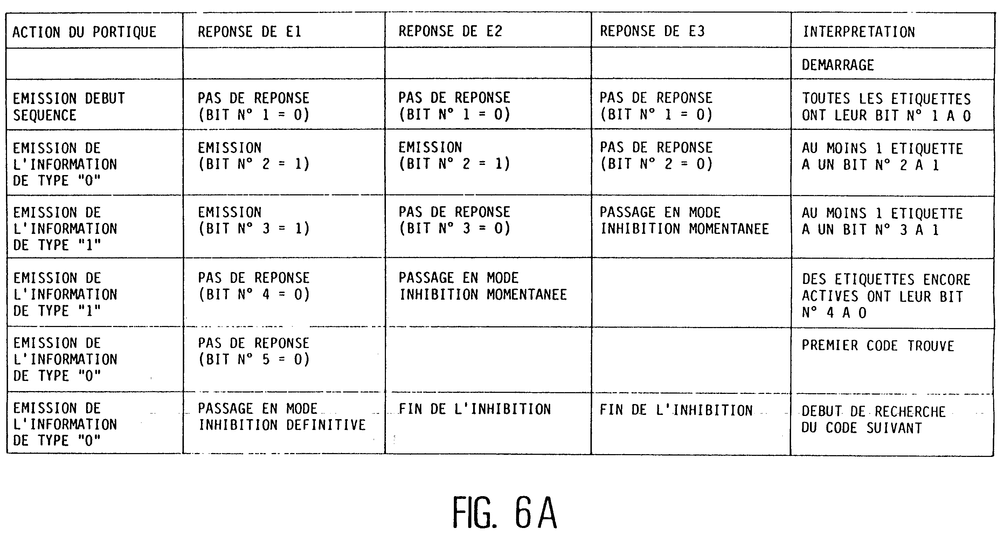

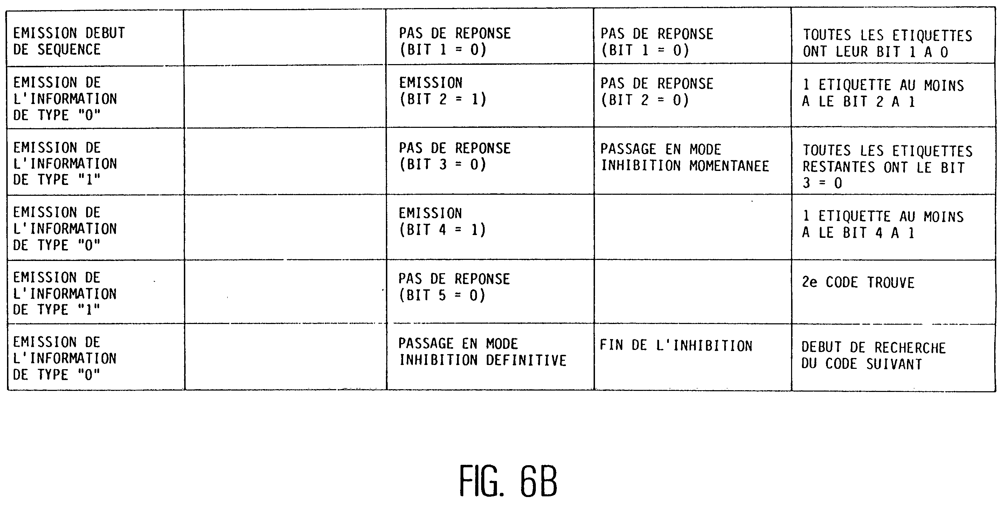

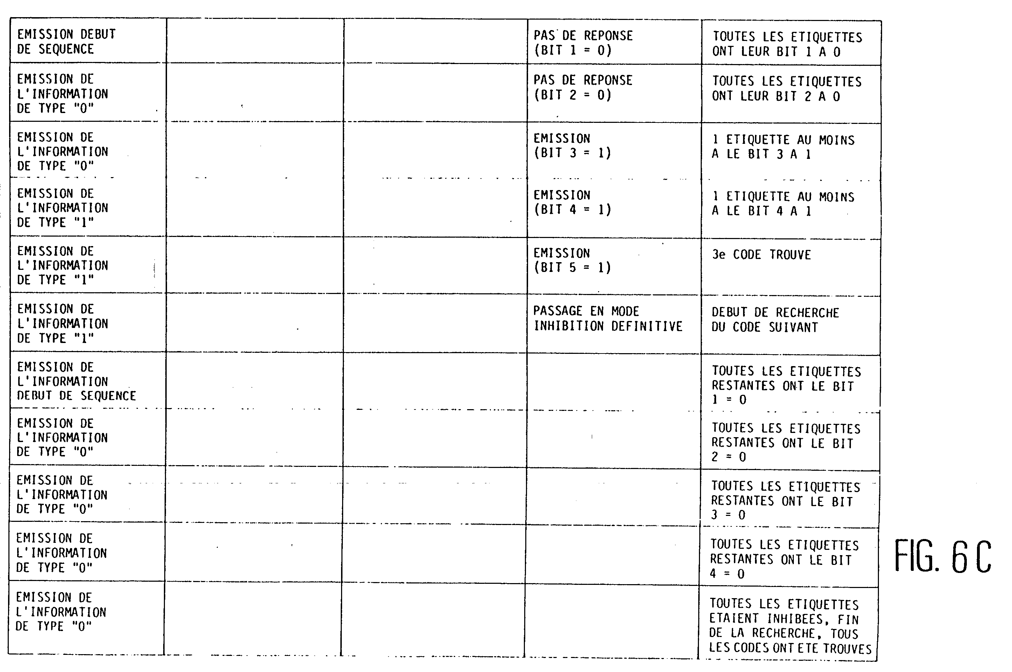

Sur les tableaux des figures 6A, 6B, 6C, on a représenté le dialogue portique/étiquettes dans un exemple de trois étiquettes E1, E2 et E3 de code respectif à cinq éléments 01100-01010 et 00111, le premier bit, ou élément binaire, étant par exemple le bit de gauche. Le modulateur 2a du circuit électronique du portique génère deux formes d'onde. L'association de ces deux formes d'onde permet de définir quatre types d'information. Dans l'exemple considéré, les informations 00-01-10 et 11 signifient respectivement, comme on l'a vu précédemment, "début de séquence de recherche", "information de type 0" indiquant que le bit traité lors de l'interrogation précédente n'est égale à 1 pour aucune étiquette active, "information de type 1" indiquant qu'au moins une étiquette a son bit, traité lors de l'interrogation précédente, à 1 et "début de séquence de recherche avec code précédent erroné".

Le portique émet un signal d'information donné dans la première colonne des tableaux des figures 6A, 6B, 6C. Les étiquettes répondent à ce signal par une réponse binaire signifiant "oui" ou "non", c'est-à-dire que les étiquettes envoyent un signal pour "oui" ou n'envoient pas de signal pour "non". L'interprétation de chaque échange portique/étiquettes est donné dans la dernière colonne des tableaux.

Le tableau de la figure 6A montre les différentes réponses données par les étiquettes E1, E2, E3 lors des premières interrogations du portique, c'est-à-dire lorsque ledit portique cherche à déterminer le code de la première étiquette, à savoir l'étiquette E1. Lorsque le code de E1 a été déterminé grâce aux inhibitions momentanées de E2 et E3, ladite étiquette E1 passe en mode d'inhibition définitive.

Le tableau de la figure 6B montre la détection de l'étiquette E2 suite à l'inhibition définitive de E1 et grâce à l'inhibition momentanée de E3. Lorsque le code de l'étiquette E2 a été déterminé, celle-ci s'inhibe définitivement et l'inhibition momentanée de E3 prend fin.

Le tableau de la figure 6C montre la détection de l'étiquette E3 suite aux inhibitions définitives de E1 et E2, et la fin du traitement lorsque les trois étiquettes ont été lues.

De façon plus pratique, et dans le but de détecter la présence d'erreurs de transmission et, éventuellement, de corriger ces erreurs, il est possible de rajouter des bits de correction aux bits définissant le code de l'étiquette.

Les étiquettes associées à un tel portique peuvent être de types différents, c'est-à-dire comporter différentes sortes d'électroniques pour "dialoguer" avec le portique. Ces étiquettes peuvent, par exemple, comporter un dispositif E/R apte, d'une part, à répondre, sur une fréquence F/k (k étant un nombre premier), aux signaux envoyés par le portique sur une fréquence F, et d'autre part, à s'inhiber lorsque son code a été retrouvé par le portique afin de permettre la recherche d'autres codes.

Outre les avantages décrits précédemment, dans le cas particulier d'une application à la mise en vente de marchandises dans une grande surface, la présente invention permet aux clients d'enregistrer eux-mêmes les articles choisis. L'invention permet donc d'éviter les longues files d'attente aux caisses où la caissière doit identifier chaque article un à un.

Cette application n'a bien sûr été donnée qu'à titre illustratif. L'invention peut s'appliquer à de nombreux autres domaines d'identification d'une personne ou d'un objet.

## Revendications

1. Système d'identification automatique d'objets ou d'individus par interrogation à distance comprenant des moyens émetteurs/récepteurs E/R interrogateurs aptes à émettre en continu un signal radio fréquence et des moyens E/R répondeurs associés à chacun des objets ou individus, lesdits moyens E/R répondeurs comportant :
- un circuit (12, 14, 18) de réception et d'émission apte à recevoir des informations codées provenant des moyens E/R interrogateurs, apte à émettre une réponse et comprenant au moins une antenne (18) d'émission/réception ;
- un dispositif (16) d'alimentation des moyens répondeurs ;
- des moyens de mémorisation (24) dans lesquels est stocké un code numérisé lié à chaque objet ou individu ; et
- un circuit (20) de contrôle et de séquencement apte à gérer tous les signaux nécessaires pour répondre aux signaux envoyés par les moyens E/R interrogateurs ; lesdits moyens E/R interrogateurs comportant :
- un dispositif (2, 4) d'émission de signaux radiofréquence qui comprend un dispositif (4, 6) de réception de signaux radiofréquence provenant des moyens E/R répondeurs et un modulateur (2a) générant des formes d'onde différentes ;
- des moyens de traitement (8) aptes à gérer les tâches nécessaires à la recherche des codes numérisés envoyés par les moyens E/R répondeurs ; et
- une mémoire (10) apte à mémoriser lesdits codes numérisés reçus ;
- l'ensemble des signaux échangés entre les moyens E/R interrogateurs et les moyens E/R répondeurs pour déterminer les codes des objets ou des individus formant une séquence de recherche de code ;
caractérisé en ce que la séquence de recherche de code consiste en une séquence de signaux d'interrogation qui changent en fonction des réponses reçues des moyens E/F répondeurs, et en ce que les moyens E/R répondeurs comportent en outre :
- des moyens d'inhibition (26) connectés audit circuit de contrôle et de séquencement et aptes à répondre aux moyens E/R interrogateurs par une inhibition momentanée ou définitive des moyens E/R répondeurs, ces moyens d'inhibition comportant au moins deux bascules, la première bascule (26a) étant une bascule d'inhibition momentanée qui est apte à assurer l'inhibition momentanée des moyens E/R répondeurs durant la séquence de recherche en cours lorsque les moyens E/R répondeurs concernés constatent que les signaux d'interrogation reçus en cours de recherche ne correspondent pas au code mémorisé dans ses moyens de mémorisation (24), les moyens E/R répondeurs restant non-inhibés à la fin de la séquence de recherche présentant un code numérisé dans leurs moyens de mémorisation correspondant aux signaux d'interrogation reçus ; et la seconde bascule (26b) étant une bascule d'inhibition définitive qui assure l'inhibition des moyens E/R répondeurs restant non-inhibés à la fin de la séquence de recherche lorsque le code numérisé recherché a été correctement reçu et mémorisé par les moyens E/R interrogateurs.

2. Système d'identification selon la revendication 1, caractérisé en ce que le code numérisé comporte un code d'identification du type d'objet ou de personne, éventuellement un sous-code aléatoire assurant l'identification unitaire de l'objet ou de la personne considéré, et éventuellement un code de contrôle pour vérifier la bonne intégrité des informations transmises.

3. Système d'identification selon l'une quelconque des revendications 1 à 2, caractérisé en ce que les moyens de mémorisation des moyens E/R répondeurs comprennent une mémoire de code (24) et un compteur d'adresse (22) apte à pointer tour à tour sur chacun des éléments constituant le code numérisé stocké dans la mémoire, ce compteur étant connecté au circuit de contrôle et de séquencement par une connexion "horloge" de commande d'avance du compteur, et une connexion "RAZ" de remise à zéro pour pointer sur le premier élément du code numérisé.

4. Système d'identification selon l'une quelconque des revendications 1 à 3, caractérisé en ce que le modulateur des moyens E/R interrogateurs génère au moins deux formes d'onde associées ensemble pour former au moins quatre types d'informations codées.

5. Système d'identification selon l'une quelconque des revendications 1 à 4, caractérisé en ce que le dispositif d'alimentation comprend un circuit de récupération d'énergie en provenance des moyens E/R interrogateurs.

6. Système d'identification selon l'une quelconque des revendications 1 à 5, caractérisé en ce que les moyens de traitement des moyens E/R interrogateurs assurant la gestion des tâches nécessaires à la recherche des codes numérisés permettent de procéder aux étapes suivantes :
a) envoi d'une information "début de séquence de recherche" correspondant à l'interrogation du premier élément de code numérisé ;
b) attente de la réponse fournie par les moyens E/R répondeurs ;
c) mémorisation, dans la mémoire des moyens E/R interrogateurs, d'un état logique correspondant à l'élément en cours de traitement du code numérisé et envoi d'une information de type correspondant à la réponse reçue afin d'interroger l'élément de code suivant ;
d) retour à l'étape b) jusqu'à la fin de la séquence de recherche lorsque le dernier élément de code est identifié ;
e) vérification de la validité du code numérisé reçu ;
f) mémorisation dans ladite mémoire du code numérisé reçu lorsque ledit code reçu est valide, et rejet dudit code numérisé dans le cas contraire avec envoi d'une information "début de séquence et code précédent erroné" et retour à l'étape b) ;
g) retour à l'étape a) lorsque le code reçu est valide afin d'interroger d'autres codes jusqu'à obtention d'un code nul.

7. Système d'identification selon la revendication 6, caractérisé en ce que le circuit de contrôle et de séquencement des moyens E/R répondeurs permet de procéder aux étapes suivantes :
a) réception de l'impulsion "début de séquence de recherche" envoyée par les moyens E/R interrogateurs ;
b) mise à zéro du compteur d'adresse des moyens de mémorisation des moyens E/R répondeurs ;
c) inhibition momentanée des moyens E/R répondeurs ou émission de fréquence jusqu'à réception de l'information codée suivante en provenance des moyens E/R interrogateurs, selon l'activité des moyens E/R répondeurs, de l'état logique de l'élément de code en cours de traitement et le type de la dernière information reçue, l'activité étant l'opposé de l'inhibition ;
d) incrémentation du compteur d'adresse des moyens de mémorisation de code et contrôle de la valeur de cette adresse avec passage à l'étape g) lorsque ladite valeur correspond au dernier élément du code traité ;
e) réception de l'information envoyée par les moyens interrogateurs de type correspondant à la réponse émise par les moyens E/R répondeurs à l'étape c), ou réception d'une information début de séquence ;
f) inhibition momentanée des moyens E/R répondeurs jusqu'à réception d'une information "début de séquence de recherche" en provenance des moyens E/R interrogateurs au cas où l'information reçue en c) par les moyens E/R interrogateurs est différente de l'information stockée à l'adresse correspondante dans la mémoire des moyens E/R répondeurs ou, dans le cas contraire, retour à l'étape c).
g) inhibition définitive des moyens E/R répondeurs lorsque le dernier élément du code numérisé a été transmis correctement, ou réactivation de ces moyens E/R répondeurs et retour à l'étape b) dans le cas contraire.

8. Système d'identification selon l'une quelconque des revendications 1 à 7, caractérisé en ce que le code numérisé consiste en une suite de bits.

9. Système d'identification selon l'une quelconque des revendications 1 à 8, caractérisé en ce que les moyens E/R interrogateurs comportent au moins trois antennes d'émission (4Aa, 4Ba, 4Ca) reliées chacune en amont à un émetteur (2bA, 2bB, 2bC), ces antennes fonctionnant deux par deux, et au moins trois antennes de réception (4Ab, 4Bb, 4Cb) connectées chacune à un récepteur (6aA, 6aB, 6aC) et à un démodulateur (6bA, 6bB, 6bC) en aval desquels un organe de décision (6c) génère un signal de réception d'au moins une des antennes.

10. Système d'identification selon la revendication 9, caractérisé en ce que les moyens de traitement des moyens E/R interrogateurs assurant la gestion des tâches nécessaires à la recherche des codes numérisés permettent de procéder aux étapes supplémentaires suivantes :
- choix d'une configuration d'émission consistant à choisir les antennes d'émission à associer ensemble lors de la mise en fonctionnement du système d'identification ;
- changement de la configuration d'émission et reprise de la séquence de recherche lorsque le code numérisé n'a pas été transmis correctement ;
- mémorisation du code numérisé lorsque ledit code a été considéré erroné pour au moins trois configurations d'émission différentes ;
- mise en oeuvre successive de toutes les séquences de recherche liées aux configurations d'émission différentes pour vérifier la totale inhibition des moyens E/R répondeurs.

## Patentansprüche

1. Selbsttätiges Erkennungssystem von Gegenständen oder Personen durch Fernabfrage, umfassend S/E(Sender/Empfänger)-Abfrageeinrichtungen, die kontinuierlich ein Hochfrequenzsignal senden, und S/E-Antworteinrichtungen, allen Gegenstände oder Personen zugeordnet, wobei besagte S/E-Antworteinrichtungen umfassen:
- einen Empfangs- und Sendekreis (12, 14, 18), der codierte Informationen empfangen kann, die von den S/E-Abfrageeinrichtungen kommen, und imstande ist, eine Antwort zu senden und wenigstens eine Sende-/Empfangsantenne (18) umfaßt;
- eine Versorgungsvorrichtung (16) der Antworteinrichtungen;
- Speichereinrichtungen (24), in denen ein mit jedem Gegenstand oder jeder Person verknüpfter digitalisierter Code gespeichert ist; und
- eine Kontroll- und Ablaufsteuerungsschaltung (20), imstande alle Signale zu verwalten, die für die Beantwortung der durch die S/E-Abfrageeinrichtungen gesendeten Signale nötig sind; wobei besagte S/E-Abfrageeinrichtungen umfassen:
- eine Hochfrequenzsignal-Sendevorrichtung (2, 4), die eine Empfangsvorrichtung (4, 6) für Hochfrequenzsignale umfaßt, die von den S/E-Antworteinrichtungen kommen, und einen Modulator (2a), der verschiedene Wellenformen erzeugt;
- Verarbeitungseinrichtungen (8), imstande die Teilverarbeitungsprogramme zu verwalten, die für die Suche der digitalisierten Codes erforderlich sind, die durch die S/E-Antworteinrichtungen gesendet werden, und
- einen Speicher (10) zum Speichern besagter empfangener Digitalcodes;
- die Gesamtheit der Signale, die ausgetauscht werden zwischen den S/E-Abfrageeinrichtungen und den S/E-Antworteinrichtungen, um die Codes der Gegenstände oder der Personen zu bestimmen, die eine Code-Suchsequenz bilden; **dadurch gekennzeichnet**, daß die Code-Suchsequenz gebildet wird durch eine Folge von Abfragesignalen, die wechseln bzw. sich ändern in Abhängigkeit von den von den S/E-Antworteinrichtungen erhaltenen Antworten, und dadurch, daß die S/E-Antworteinrichtungen außerdem umfassen:
- eine Hemmeinrichtung (26), verbunden mit besagter Kontroll- und Ablaufsteuerungsschaltung und imstande, auf die S/E-Abfrageeinrichtungen mit einer momentanen oder definitiven Ausschaltung der S/E-Antworteinrichtungen zu reagieren, wobei diese Ausschalteinrichtungen wenigstens zwei Kippstufen umfassen, wovon die erste (26a) eine Kippstufe zum momentanen Ausschalten ist, die die S/E-Antworteinrichtungen während der Suchsequenz momentan ausschalten kann, wenn die betreffenden S/E-Antworteinrichtungen feststellen, daß die im Laufe der Suche empfangenen Abfragesignale nicht dem Code entsprechen, den sie in ihren Speichereinrichtungen (24) gespeichert haben, wobei die am Ende der Suchsequenz unausgeschaltet gebliebenen S/E-Antworteinrichtungen in ihren Speichereinrichtungen einen den empfangenen Abfragesignalen entsprechenden digitalisierten Code aufweisen; die zweite Kippstufe (26b) ist eine Kippstufe zum definitiven Ausschalten, die das Ausschalten der am Ende der Suchsequenz unausgeschaltet gebliebenen S/E-Antworteinrichtungen sicherstellt, wenn der gesuchte Digitalcode durch die S/E-Abfrageeinrichtungen korrekt empfangen und abgespeichert wurde.

2. Erkennungssystem nach Anspruch 1, dadurch gekennzeichnet, daß der digitalisierte Code einen Identifikationcode des Typs des Gegenstands oder der Person umfaßt, eventuell einen Zufall-Untercode der die einheitliche Identifizierung des Gegenstands oder der betreffenden Person gewährleistet, und eventuell einen Kontrollcode zur Überprüfung der einwandfreien Integrität der übertragenen Informationen.

3. Erkennungssystem nach einem der Ansprüche 1 und 2, dadurch gekennzeichnet, daß die Speichereinrichtungen der S/E-Antworteinrichtungen einen Codespeicher (24) umfassen und einen Adreßzähler (22), imstande nacheinander auf jedes der Elemente zu zeigen, die den in dem Speicher gespeicherten digitalisierten Code bilden, wobei dieser Zähler verbunden ist mit der Kontroll- und Ablaufsteuerungsschaltung durch eine "Takt"-Verbindung zur Steuerung des Zählerfortschritts, und eine Nullungsverbindung, um auf das erste Element des digitalisierten Codes zu zeigen.

4. Erkennungssystem nach einem der Ansprüche 1 bis 3, dadurch gekennzeichnet, daß der Modulator der S/E-Abfrageeinrichtungen wenigstens zwei Formen von Wellen erzeugt, miteinander vereinigt, um wenigstens vier Typen codierter Informationen zu erzeugen.

5. Erkennungssystem nach einem der Ansprüche 1 bis 4, dadurch gekennzeichnet, daß die Versorgungseinrichtung eine Verwertungsschaltung der von den S/E-Abfrageeinrichtungen kommenden Energie umfaßt.

6. Erkennungssystem nach einem der Ansprüche 1 bis 5, dadurch gekennzeichnet, daß die Verarbeitungseinrichtungen der S/E-Abfrageeinrichtungen, die die Verwaltung der für die Suche der digitalisierten Codes erforderlichen Teilverarbeitungsprogramme gewährleisten, die Durchführung der folgenden Schritte ermöglichen:
a) Senden einer Information "Suchsequenzanfang", der Abfrage des ersten Elements des codierten Codes entsprechend;
b) Abwarten der durch die S/E-Antworteinrichtungen gelieferten Antwort;
c) Speichern - in dem Speicher der S/E-Abfrageeinrichtungen - eines logischen Zustands, der dem in Verarbeitung befindlichen Element des digitalisierten Codes entspricht, und Senden einer Information des Typs, der der empfangenen Antwort entspricht, um das nächste Codeelement abzufragen;
d) Rückkehr zum Schritt b) bis zum Ende der Suchsequenz, wenn das letzte Element des Codes identifiziert ist;
e) Überprüfung der Gültigkeit des empfangenen digitalisierten Codes;
f) Speichern des empfangenen digitalisierten Codes in dem genannten Speicher, wenn besagter empfangener Code gültig ist, und Zurückweisen des digitalisierten Codes im Umkehrfall und Senden einer Information "Sequenzbeginn und vorangehender Code falsch" und Rückkehr zum Schritt b);
g) Rückkehr zum Schritt a), wenn der empfangene Code gültig ist, um weitere Codes abzufragen, bis zum Empfang eines Null-Codes.

7. Erkennungssystem nach Anspruch 6, dadurch gekennzeichnet, daß die Kontroll- und Ablaufsteuerungsschaltung der S/E-Antworteinrichtungen die Durchführung der folgenden Schritte ermöglicht:
a) Empfang des Impulses "Suchsequenzbeginn", gesendet durch die S/E-Abfrageeinrichtungen;
b) Nullstellung des Adreßzählers der Speichereinrichtungen der S/E-Antworteinrichtungen;
c) momentane Ausschaltung der S/E-Antworteinrichtungen oder Frequenzemission bis zum Empfang der nachfolgenden codierten Information von den S/E-Abfrageeinrichtungen, entsprechend der Aktivität der S/E-Antworteinrichtungen, des logischen Zustands des in Verarbeitung befindlichen Codeelements und des Typs der letzten empfangenen Information, wobei die Aktivität das Gegenteil der Ausschaltung ist;
d) Inkrementierung des Adreßzählers der Code-Speichereinrichtungen und Kontrolle des Werts dieser Adresse mit Übergang zum Schritt g) wenn besagter Wert dem letzten Element des verarbeiteten Codes entspricht;
e) Empfang von Information des Typs der durch die S/E-Antworteinrichtungen im Schritt c) gesendeten Antwort, gesendet durch die Abfrageeinrichtungen, oder Empfang einer Sequenzbeginn-Information;
f) momentane Ausschaltung der S/E-Antworteinrichtungen bis zum Empfang einer Information "Suchfrequenzbeginn" von den S/E-Abfrageeinrichtungen für den Fall, daß die in c) durch die S/E-Abfrageeinrichtungen empfangene Information sich unterscheidet von der Information, die mit der entsprechenden Adresse gespeichert ist in dem Speicher der S/E-Antworteinrichtungen oder, im gegenteiligen Fall, Rückkehr zum Schritt c);
g) definitive Ausschaltung der S/E-Antworteinrichtungen wenn das letzte Element des digitalisierten Codes korrekt übertragen wurde, oder Reaktivierung dieser S/E-Antworteinrichtungen und Rückkehr zum Schritt b) im gegenteiligen Fall.

8. Erkennungssystem nach einem der Ansprüche 1 bis 7, dadurch gekennzeichnet, daß der digitalisierte code gebildet wird durch eine Bitfolge.

9. Erkennungssystem nach einem der Ansprüche 1 bis 8, dadurch gekennzeichnet, daß die S/E-Abfrageeinrichtungen wenigstens drei Sendeantennen (4Aa, 4Ba, 4Ca) umfassen, jede verbunden mit einem Sender (2bA, 2bB, 2bC), wobei diese Antennen paarweise funktionieren, und wenigstens drei Empfangsantennen (4Ab, 4Bb, 4Cb), jede verbunden mit einem Empfänger (6aA, 6aB, 6aC) und mit einem Demodulator (6bA, 6bB, 6bC), denen ein Entscheidungsorgan (6c) nachgeschaltet ist, das ein Empfangssignal von wenigstens einer der Antennen erzeugt.

10. Erkennungssystem nach Anspruch 9, dadurch gekennzeichnet, daß die Verarbeitungseinrichtungen der S/E-Abfrageeinrichtungen die Verwaltung der Teilverarbeitungsprogramme sicherstellen, die nötig sind für die Suche der digitalisierten Codes, die ermöglichen, folgende zusätzliche Schritte auszuführen:
- Wahl einer Sendekonfiguration, darin bestehend, bei der Inbetriebnahme des Erkennungssystems die beteiligten bzw. miteinander verbundenen Sendeantennen zu wählen;
- Änderung der Sendekonfiguration und Wiederaufnahme der Suchsequenz, wenn der digitalisierte Code nicht korrekt übertragen wurde;
- Speicherung des digitalisierten Codes, wenn besagter Code bei wenigstens drei verschiedenen Sendekonfigurationen als falsch betrachtet wurde;
- sukzessive Durchführung von allen mit den verschiedenen Sendekonfigurationen verbundenen Suchsequenzen, um die totale Ausschaltung der S/E-Antworteinrichtungen zu überprüfen.

## Claims

1. Automatic identification system for objects or persons by remote interrogation comprising interrogating emitting/receiving (E/R) means able to continuously emit a radiofrequency signal and answering E/R means associated with each of the objects or individuals, said answering E/R means comprising:
- a receiving and emitting circuit (12,14,18) able to receive coded informations from the interrogating E/R means, able to emit a response and comprising at least one emitting/receiving antenna (18),
- a supply device (16) for the answering means,
- storage means (24) in which is stored a digitized code linked with each object or individual and
- a checking and sequencing circuit (20) able to control all the signals necessary for answering to the signals supplied by the interrogating E/R means,
- said interrogating E/R means comprising:
- a device (2,4) for emitting radiofrequency signals having a device (4,6) for receiving radiofrequency signals coming from the answering E/R means and a modulator (2a) generating different wave shapes,
- processing means (8) able to control the tasks necessary for investigating the digitized codes delivered by the answering E/R means and
- a memory (10) able to store said digitized codes received,
- the group of signals exchanged between the interrogating E/R means and the answering E/R means for determining the codes of objects or individuals forming a code search sequence,
characterized in that the code search sequence consists of a sequence of interrogation signals, which change as a function of the answers received from the answering E/R means and in that the answering E/R means also comprise:
- inhibiting means (26) connected to said checking and sequencing circuit and able to reply to the interrogating E/R means by an instantaneous or definitive inhibition of the answering E/R means, said inhibiting means incorporating at least two flip-flops, the first flip-flop (26a) being an instantaneous inhibition flip-flop able to ensure the instantaneous inhibition of the answering E/R means during the search sequence taking place when the answering E/R means in question establish that the interrogation signals received during the search do not correspond to the code stored in the storage means (24), the answering E/R means remaining non-inhibited at the end of the search sequence having a digitized code in their storage means corresponding to the interrogation signals received and the second flip-flop (26b) is a definitive inhibition flip-flop ensuring the inhibition of the answering E/R mean remaining non-inhibited at the end of the search sequence when the sought digitized code has been correctly received and stored by the interrogating E/R means.

2. Identification system according to claim 1, characterized in that the digitized code incorporates an identification code of the type of object or person, optionally a random subcode ensuring the unitary identification of the considered object or person and optionally a check code for checking the integrity of the informations transmitted.

3. Identification system according to either of the claims 1 and 2, characterized in that the storage means of the answering E/R means incorporate a code memory (24) and an address counter (22) able to point in turn to each of the elements constituting the digitized code stored in the memory, said counter being connected to the checking and sequencing circuit by a "clock" connection controlling the advance of the counter and a zeroing connection for pointing on the first element of the digitized code.

4. Identification system according to any one of the claims 1 to 3, characterized in that the modulator of the interrogating E/R means generates at least two wave shapes combined together to form at least four coded information types.

5. Identification system according to any one of the claims 1 to 4, characterized in that the energizing device comprises a circuit for the recuperation of the energy from the interrogating E/R means.

6. Identification system according to any one of the claims 1 to 5, characterized in that the processing means of the interrogating E/R means ensuring the control of the tasks necessary for the search for the digitized codes make it possible to perform the following stages:
a) transmitting a "start of search sequence" information corresponding to the interrogation of the first element of the digitized code,
b) awaiting the answer supplied by the answering E/R means,
c) storing in the memory of the interrogating E/R means a logic state corresponding to the element being processed of the digitized code and transmission of an information of a type corresponding to the answer received in order to interrogate the following code element,
d) return to stage b) up to the end of the search sequence when the final code element is identified,
e) verification of the validity of the digitized code received,
f) storage in said memory of the digitized code received when said received code is valid and rejection of the said digitized code in the opposite case with the transmission of a "sequence start and erroneous preceding code" information and return to stage b),
g) return to stage a) when the received code is valid in order to interrogate other codes until a zero code is obtained.

7. Identification system according to claim 6, characterized in that the checking and sequencing circuit of the answering E/R means makes it possible to perform the following stages:
a) reception of the "start of search sequence" pulse transmitted by the interrogating E/R means,
b) zeroing the address counter of the storage means of the answering E/R means,
c) instantaneous inhibiting of the answering E/R means or frequency emission up to the reception of the following coded information coming from the interrogating E/R means, as a function of the activity of the answering E/R means, of the logic state of the code element being processed and the type of the last information received, activity being the opposite to inhibition,
d) incrementation of the address counter of the code storage means and checking the value of said address with the passage to stage g) when said value corresponds to the final element of the processed code,
e) reception of the information transmitted by the type interrogating means corresponding to the answer emitted by the answering E/R means in stage c) or the reception of a start of sequence information,
f) instantaneous inhibition of the answering E/R means up to the reception of a "start of search sequence" information coming from the interrogating E/R means in the case when the information received in c) by the interrogating E/R means is different from the information stored at the corresponding address in the memory of the answering E/R means, or in the opposite case, return to stage c),
g) definitive inhibition of the answering E/R means when the final element of the digitized code has been correctly transmitted or reactivation of said answering E/R means and return to stage b) in the opposite case.

8. Identification system according to any one of the claims 1 to 7, characterized in that the digitized code consists of a string of bits.

9. Identification system according to any one of the claims 1 to 9, characterized in that the interrogating E/R means comprise at least three emitting antennas (4Aa, 4Ba, 4Ca) each connected upstream to an emitter (2bA, 2bB, 2bC), said antennas operating in pairs, and at least three receiving antennas (4Ab, 4Bb, 4Cb) each connected to a receiver (6aA, 6aB, 6aC) and to a demodulator (6bA, 6bB, 6bC) downstream of which a decision member (6c) generates a reception signal of at least one of the antennas.

10. Identification system according to claim 9, characterized in that the processing means of the interrogating E/R means ensuring the control of the tasks necessary for the search of the digitized codes make it possible to perform the following supplementary stages:
choice of an emission configuration consisting of choosing the emitting antennas to be combined with one another during the putting into operation of the identification system,
change of emission configuration and resumption of the search sequence when the digitized code has not been correctly transmitted,
storage of the digitized code when said code has been considered as erroneous for at least three different emission configurations,
successive performance of all the search sequences linked with the different emission configurations in order to check the total inhibition of the answering E/R means.
